# EUROPEAN PATENT SPECIFICATION

(11) **EP 1 940 653 B1**
(45) Date of publication and mention of the grant of the patent: **01.04.2009**
(21) Application number: 06826499.3
(22) Date of filing: 23.10.2006
(51) Int. Cl.: B60R 13/01, B62D 29/00, B60R 13/08

(54) **PANEL STRUCTURE**
PLATTENSTRUKTUR
STRUCTURE DE PANNEAU

(30) Priority: 25.10.2005 US 729911 P; 08.11.2005 US 734472 P; 19.10.2006 US 551020
(43) Date of publication of application: 09.07.2008
(73) Proprietor: Zephyros Inc., Romeo, MI 48065 (US)
(72) Inventor: HARTHCOCK, Matthew, Oakland Twp., MI 48306 (US); PATTON, Eric, Rochester, MI 48306 (US); WALKER, Jason, Lenox, MI 48048 (US)
(74) Representative: Bawden, Peter Charles
(86) International application number: PCT/US2006/041340
(87) International publication number: WO 2007/050536

(56) References cited:
- WO-A-01/92086
- WO-A-99/08854
- WO-A-99/37506
- DE-A1-9102005 011 31
- US-A- 5 482 343
- US-A1- 2002 117 811
- US-A1- 2005 230 165

## Description

### CLAIM OF PRIORITY

This application claims the benefit of the filing dates of U.S. Provisional Application Nos. 60/729,911 filed October 25, 2005 and 601734.472 filed November 8, 2005 along with U.S. Application Serial No. 11/551,020, filed October 19, 2006.

### FIELD OF THE INVENTION

The present invention relates generally to a panel structure that incorporates one or more panels and a material for providing reinforcement, baffling, sealing, edging, sound absorption, damping or attenuation, thermal insulation, combinations thereof or the like.

### BACKGROUND OF THE INVENTION

For many years, industry, and particularly the transportation industry, has been concerned with designing innovative structures and/or material that assist in providing functional attributes such as reinforcement, baffling, edging, sealing, sound absorption, damping or attenuation, thermal insulation, combinations thereof or the like to articles of manufacture such as airplanes, automotive vehicles, buildings, furniture or the like. In the interest of continuing such innovation, the present invention provides a panel structure having one or more desirable functional attributes

### SUMMARY OF THE INVENTION

An interior panel structure for an airplane includes at least one panel and more typically includes a first panel opposing a second panel. A strip of activatable material is located adjacent the at least one panel and extending along a peripheral region of the panel structure. For example, the activatable material can be located in a gap between the first panel and the second panel about the peripheral region of the panel structure. The activatable material can have one or more of the following characteristics and ingredients: 1) a level of ductility that allows the material to be stretched such that a second cross-sectional area of the material can become less than half of a first original cross-sectional area of the material at the same location prior to rupture of the material; and a blowing agent, a curing agent or both.

The document US 2002/0117811 A discloses a prior art interior panel structure wich comprises
a panel;
activatable material adjacent the at least one panel for the purposes of providing edge close-out to the panel structure and for providing local reinforcement to the panel structure the activatable material having they a blowing agent and a curing agent*.*

The panel structure of the invention is configured to be used in an airplane where the activatable material has a level of ductility prior to activation of the material that allows the material to be stretched such that a second cross-sectional area of the material can become less than half of a first original cross sectional area of the material at the same location prior to rupture of the material.

### BRIEF DESCRIPTION OF THE DRAWINGS

The features and inventive aspects of the present invention will become more apparent upon reading the following detailed description, claims and drawings, of which the following is a brief description:
Fig. 1 is a perspective partially cut-away view of a portion of an exemplary panel structure formed in accordance with an aspect of the present invention.
Fig. 2 is a perspective view of a sheet with masses of material distributed thereon according to an exemplary aspect of the present invention.
Fig. 3 is a perspective view of an exemplary interior of an airplane in accordance with an aspect of the present invention.
Fig. 4A is a perspective partially cut-away view of a portion of an exemplary panel structure prior to activation of a material of the structure.
Fig. 4B is a perspective partially cut-away view of the portion the exemplary panel structure of Fig. 4A after activation of the material of the structure.
Fig. 5 is a perspective view of an additional or alternative embodiment of a panel structure according to the present invention.
Fig. 6 is a perspective view of another additional or alternative embodiment a of a panel structure according to the present invention.
Fig. 7 is a perspective view of another additional or alternative embodiment a of a panel structure according to the present invention.
Fig. 8 is a perspective view of another additional or alternative embodiment a of a panel structure according to the present invention.
Figs. 9-13 illustrate the formation of a panel structure according to one aspect of the present invention.
Figs. 13A, 13B, 14A and 14B illustrate an expandable material of the present invention being stretched to illustrate one or more properties of the expandable material.
Fig. 15 is a perspective view of the underside of an exemplary airplane;
Fig. 16 is a side view of an exemplary panel structure disposed in a cavity of the airplane of the Fig. 15.

### DETAILED DESCRIPTION OF THE INVENTION

The invention relates to a panel structure of an article of manufacture and a method of forming the panel structure. The panel structure includes at least one panel and a material associated with (e.g., laminated or layered with) the at least one panel. Typically, the material is disposed between a first panel and second panel, although not necessarily required. The material is also typically a functional material that provides reinforcement, baffling, sealing, sound absorption, edging, sound damping, sound attenuation, thermal insulation, combinations thereof or the like to the panel structure and/or to an article of manufacture incorporating the panel structure.

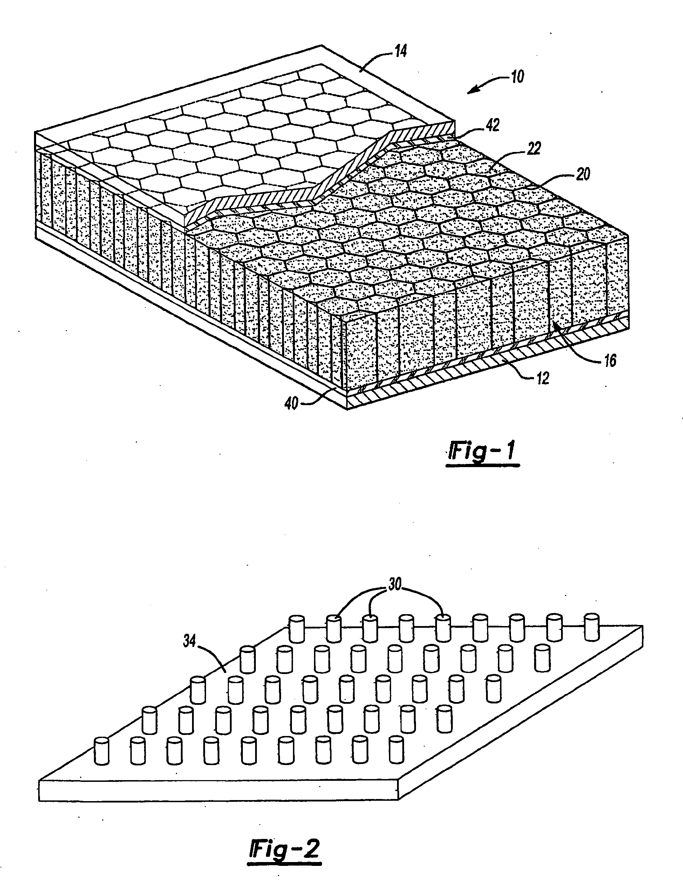

Referring to Figure 1, there is illustrated an exemplary embodiment of an interior panel structure 10 of an airplane in accordance with an aspect of the present invention. The panel structure 10 includes a first or inner panel 12 opposite a second or outer panel 14. The panel structure 10 also includes a composite 16 intermediate the first panel 12 an second panel 14.

It should be understood that the panels (e.g., the first and second panels 12, 14) of the present invention may be as thick or thin as needed for desired. For exemplary purposes, the thickness of the panels is typically at least about 0.03 mm but may be less, more typically at least about 0.2 mm and even more typically at least about 0.4 mm and is typically less than about 0.5 cm but may be greater, typically less than about 3 mm and even more typically less than about 1 mm.

The first panel 12 and the second panel 14 are shown as being substantially planar, however, it is contemplated that the first and second panels 12, 14 may be contoured as desired or needed. Typically, such contouring will depend upon the location that the panels 12, 14, the panel structure 10 or both are to be installed within the airplane or other article of manufacture.

The first panel 12 and second panel 14 may be formed of a variety of materials. Exemplary materials include metals, polymeric materials (e.g., plastics, elastomers, thermorplastics, thermosets, combinations thereof or the like). The materials of the panels may also be reinforced with minerals, fibrous materials (e.g., glass, carbon or nylon fibers), combinations thereof or the like. In one embodiment, the first panel 12 is formed of fiberglass/plastic composite and the second panel 14 is formed of a metal or metal alloy.

The composite 16, as shown, includes a support 20 and a material 22 (e.g., a matrix material or functional material) integrated with the support 20. It should be noted, however, that it is contemplated that the panel structure 10 may include only the material 22 without the support 20. The support 20 may be formed in a variety of shapes and configurations such as corrugations, lattice structures or the like. In the particular embodiment shown, the support 20 is a honeycomb structure defining a plurality of openings into which the material 22 has been placed or located.

When included, the support is typically formed of a polymeric material such as a thermoplastic or thermoset polymeric material, which may or may not be reinforced with minerals or fibrous materials (e.g., glass, carbon or nylon fibers). It is contemplated, however, that the support may be formed of several additional or alternative materials as well such as metals, fibrous materials (e.g. cardboard, paper materials), combinations thereof or the like which may be coated or uncoated.

### The Material

The material 22 typically provides the panel structure 10 (or the article of manufacture including the panel structure) with reinforcement, baffling, sealing, sound absorption, damping or attenuation, thermal insulation, combinations thereof or the like. Thus, the material may exhibit relatively high strength to weight ratios, relatively high sound attenuation characteristics, combinations thereof or the like.

The material 22 is typically selected so as to be activatible under a desired condition. As used herein, activatable means that the material softens (e.g, melts), cures, expands, foams or a combination thereof upon exposure to a condition or upon the combination of particular chemicals (e.g., 2-component materials). Typically, the material, upon activation, can wet, and preferably bond to adjacent surfaces (e.g., the surfaces provided by the panels 12, 14, the support 20 or a combination thereof).

In a preferred embodiment, typically for reinforcement, the material has a post-cure glass transition temperature that is greater than any temperatures to which the material may be exposed while in its intended environment of use.

Exemplary post-cure glass transition temperatures may be greater than about 80 degrees Celcius and more preferably greater than about 100 degrees Celsius. Other desired characteristics of the material might include good adhesion retention and degradation resistance particularly in adverse environments such as highly variable temperature environments, high dynamic activity environments, combinations thereof or the like. For particular embodiments (e.g., where damping or sound absorption is desired), the material may stay in a softer or goopy state or it may become more solid particularly if it has a lower post-cure glass transition temperature.

The material may be a thermoplastic, a thermoset or a blend thereof. According to one embodiment, the material is as an epoxy-containing material, an ethylene-containing polymer, an acetate or acrylate containing polymer, or a mixture thereof, which when compounded with appropriate ingredients (typically a blowing agent, a curing agent, and perhaps a filler), typically expands, cures or both in a reliable and predictable manner upon the application of heat or another activation stimulus. Thus, according to one embodiments, an exemplary material may be a heat-activated and/or epoxy-based resin having foamable characteristics. Of course, the material may be activated by other conditions or stimuli. Generally, it is contemplated that, particularly for higher expansion materials, the activatable material may include or be based upon an elastomer (e.g., rubber), an acetate, an acrylate or combinations thereof.

From a chemical standpoint for a thermally-activated material, such material is usually initially processed as a thermoplastic material before curing. After curing, the material typically becomes a thermoset material that is fixed and incapable of any substantial flow. Examples of preferred formulations that are commercially available include those available from L&L Products, Inc. of Romeo, Michigan, under the designations L-0502, L-0504, L-1066, L-2105, L-2190 L-2663, L-5204, L-5206, L-5207, L-5208, L-5214, L-5218, L-5222, L-5248, L-6000, L-7102, L-7220, L-8000, L-8100, L-8110, L-8115, L-9000 or combinations thereof. It is also contemplated that the material may have a fiberglass or other fabric material integrated to one or more sides of the material and/or within the material.

The material 22 may be formed using a variety of processing techniques, machines and the like. Possible processing techniques for the preferred materials include injection molding, blow molding, thermoforming, extrusion with a single or twin screw extruder or extrusion with a mini-applicator extruder. The material may also be formed as a blown or a cast film, particularly prior to expansion.

Though preferred materials are disclosed other suitable material may be used in conjunction with the present invention. The choice of the material 22 used will typically be dictated by performance requirements and economics of the specific application and requirements. Examples of other possible materials include, but are not limited to, polyolefins, copolymers and terpolymers with at least one monomer type an alpha-olefin, phenol/formaldehyde materials, phenoxy materials, polyurethanes typically with high glass transition temperatures (including polyureas), and mixtures or composites thereof (optionally including solid or porous metals). See also, U.S. Patent Nos. 5,766,719; 5,755,486; 5,575,526; 5,932,680 (incorporated herein by reference).

In applications where the material is a heat activated material, such as when a thermally melting, expanding, curing and/or foaming material is employed, an important consideration involved with the selection and formulation of the material can be the temperature at which the material activates, cures or both. In most applications, it is undesirable for the material to activate at room temperature or the ambient temperature in a production or assembly environment. Typically, it is desirable for the material to activate at higher processing temperatures. Typical activation temperature[s] is at least about 120 °F or less, more typically at least about 190 °F, still more typically at least about 230 °F and even more typically at least about 265 °F and typically less than about 600 °F or greater, more typically less than about 450 °F and even more typically less than about 350 °F and still more typically less than about 275 °F. Exposure to such temperatures typically occurs for a period of time that is at least about 10 minutes or less, more typically at least about 20 minutes and even more typically at least about 30 minutes and typically less than about 300 minutes or greater, more typically less than about 180 minutes and even more typically less than about 90 minutes.

Although the material 22 may be heat activated, it may be otherwise additionally or alternatively activated by other stimuli to cure, expand, bond, combinations thereof or the like. Without limitation, such material may be activated by alternative stimuli such as, pressure, moisture, chemicals, ultraviolet radiation, electron beam, induction, electromagnetic radiation or by other ambient conditions. As particular examples, the material may be a two-component adhesive material that expand, cure, adhere or a combination thereof upon adding one component to the other. Examples of first component/second component materials include epoxy/amine materials and epoxy/acid materials.

### Manufacture

The panel structure of the present invention may be formed according to a variety of protocols. The material may be applied directly to the panels, the support or both. Thereafter, the material may be activated to soften, cure, expand or a combination thereof to wet and adhere the material to the panels, the support or both. It is also contemplated that the material may be preactivated and subsequently applied to the panels, the support or both. Further, it is contemplated that one or more adhesives may be employed for attaching the panels, the material, the support or combinations thereof to each other.

When the material 22 is incorporated with a support 20 having openings such as the honeycomb structure of Fig. 1, various different techniques may be used to provide the material 22 to the openings. In one embodiment, and referring to Fig. 2, masses 30 of the material 22 may be provided on a surface 34, which may be part of one of the panels 12, 14, of the panel structure 10 or of another panel, according to the pattern of openings of the support 20. Then, the masses 30 are located within the openings of the support 20, while they remain upon the surface 34 by bringing the surface 34 and support 22 closer to each other. In such an embodiment, the masses 30 may be provided manually or automatically to the surface 34. For instance, the masses 30 may be provided to the surface 34 using an extruder (e.g., using extrude-in-place techniques). It may also be possible to manually or automatically (e.g., with an extruder and or extrude-in-place techniques) apply masses 30 of the material 22 directly into the opening of the support 20. Techniques for extruding such materials in these embodiments are disclosed in commonly owned U.S. Patent No. 5,358,397 and U.S. Patent Application serial no. 10/342,025, filed January 14, 2003, titled "Method and Apparatus for Applying Flowable Materials", both of which are incorporated herein by reference for all purposes.

In an alternative embodiment, and referring to Fig. 2, it is contemplated that both the panel may be formed of a material (e.g., an expandable material) as well as the masses 30 of material. In such an embodiment the panel of material would typically serves to adhere the masses and the support to one of the panels 12, 14.

In another embodiment, the material 22 is applied to the support 20 by dispensing multiple (e.g. 3, 6, 20, 100 or more) masses (e.g., as small pellets or as a powder) of the material 22 into each of the openings of the support 20. Such masses may be poured, sprinkled or otherwise dispensed into the openings of the support 20.

The panels 12, 14 may be attached to the support 20, the material 22 or both before, during or after activation of the material 22. Thus, in one embodiment, the material 22 is activated to soften, expand, cure or a combination thereof followed by attaching the panels 12, 14 to the material. In the embodiment illustrated, the material 22 is activated to soften (e.g., melt), expand and wet the support 20 while simultaneously and/or thereafter to cure and adhere to the support 20 thereby forming the composite 16. Thereafter, the panels 12, 14 are respectively adhered to opposite sides of the composite 16 with adhesive layers 40, 42.

In another embodiment, one or both of the panels 12, 14 are placed adjacent the material 22, the support 20 or both (e.g., placed adjacent opposite sides of the material 22 and/or the support 20). Then, the material 22 is activated to soften (e.g., melt), expand and wet the support 20 and one or both of the panels 12, 14 while simultaneously and/or thereafter curing and adhering to the support 20 and one or both of the panels 12, 14. In such an embodiment, the material 22, the composite 16 or both can be attached to the panels 12, 14 without the additional adhesive layers 40, 42, although such adhesive layers may be additionally included. Also, in such an embodiment, temporary attachments (e.g., fasteners) may be employed to located the panels 12, 14, the material 22 and, if used, the support 20 relative to each other at least until activation of the material 22.

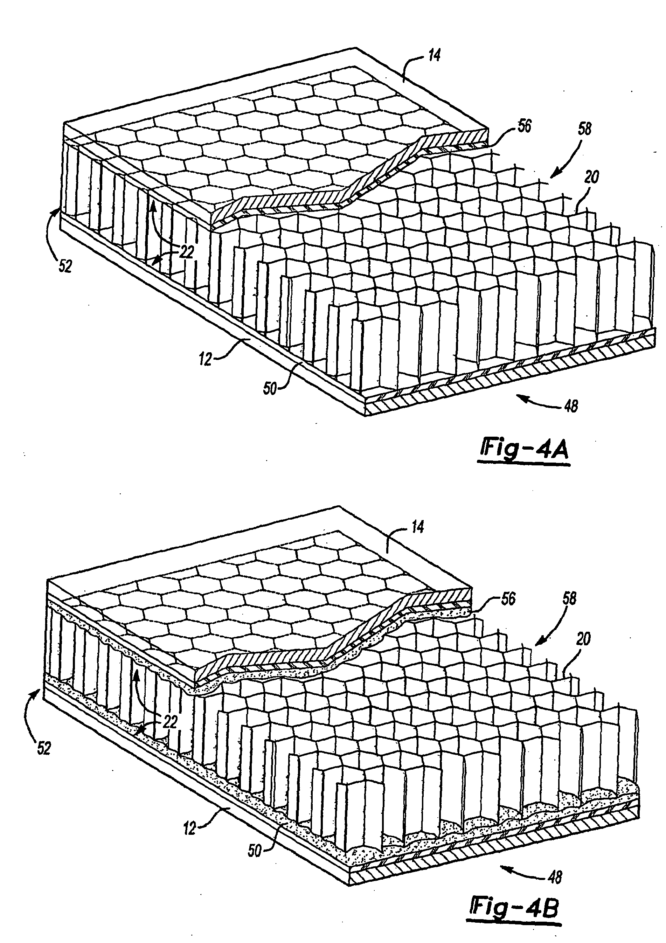

In one particular embodiment, referring to Figs. 4A and 4B, there is a panel structure 48 with a first layer 50 of the material 22 positioned between the first panel 12 and a first side 52 of the support 20 and a second layer 56 of the material 22 positioned between the second panel 14 and a second side 58 of the support 20.

Once assembled, typically either automatically, manually or a combination thereof, the layers 50, 56 of material 22 are activated to soften, expand and cure. As can be seen, the layers 50, 56 wet and adhere to both the support 20, particularly the sides 52, 58 of the support and to side surface of the panels 12, 14. The layers 50, 56 can also expand into and fill at least a portion of the opening of the support 20. Advantageously, the layers 50, 56 may be able to provide reinforcement, structural integrity, sound and/or vibration dampening, sound absorption or a combination thereof to the panel structure 48. While, the material 22 in Figs. 4A and 4B is not shown as being located in the more central openings of the support 20 as discussed in previous embodiments, it is contemplated that such material may additionally be so located and employed as previously described.

In a preferred embodiment, the material 22 of the panel structure is heat activated in a panel press. For activation, the components (i.e., the material 22, the layers 52, 56, the support 20 and the panels 12, 14 or a combination thereof) of the panel structure may be assembled as described above or otherwise. Thereafter, the panel structure is fed to a panel press where it experiences temperatures that are typically above about 150 °F, more typically above about 200 °F and even more typically above about 265 °F and below about 550 °F, more typically below about 420 °F and even more typically below about 350 °F. Such exposure is typically for a time period of at least about 10 minutes, more typically at least about 30 minutes and even more typically at least about 60 minutes and less than about 360 minutes more typically less than about 180 minutes and even more typically less than about 90 minutes. While in the press, a pressure is typically applied to the panel structure urging the components (i.e., the material 22, the layers 52, 56, the support 20 and the panels 12, 14 or a combination thereof) of the panel structure toward each other. Advantageously, typically for reinforcement, the material can provide more thorough adhesion to the support.

It is additionally contemplated that other additional or alternative techniques may be used to assist in the formation of the panel structure. Such techniques can include vacuum forming and baking, autoclaving and pressure, others or combinations thereof. Such techniques can assist in forming panels with contours. Heats and time period for these techniques can be the same as those discussing above or may be different depending upon the activatable material used.

### Application

Typically, although not required, the panel structure is employed for forming the interior of one of these articles of manufacture. In such an embodiment wherein the panel structure includes at least two panels, at least one panels of the panel structure is typically exposed to and/or at least partially defines an inner open area of the article while another panel of the panel structure is closer to a body of the article. For example, in a building, the inner or first panel would typically be exposed to and/or define the interior of a room of the building while the outer or second panel would typically be closer to the outer building material (e.g., brick, siding or the like) of the building. As another example, in an automotive vehicle, the inner or first panel would typically be exposed to and/or at least partially define an interior cabin of the vehicle while the outer or second panel would typically be closer to the body of the vehicle.

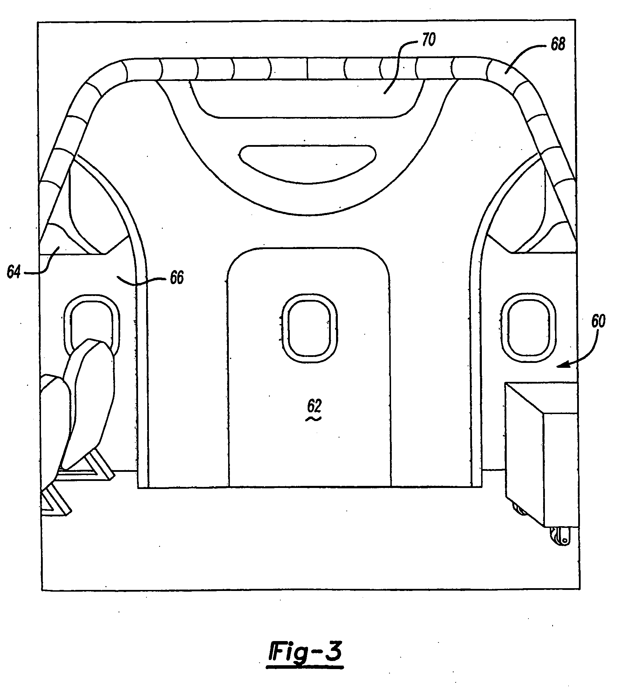

Referring additionally to Fig. 3, it is contemplated that the panel structure 10 can be employed in several locations within the interior 60. For example, and without limitation, the panel may form part or the entirety of a door 62, an overhead storage compartment 64, a side panel 66, an archway 68, a ceiling panel 70, combinations thereof or the like. The panel may also be employed in an airplane wing, floor structure or the like.

When the structure 10 is employed within an airplane the first or inner panel 12 will typically be exposed and/or at least partially define the interior cabin 60 of the -airplane. The second or outer panel 14 is typically closer to the fuselage of the airplane. Of course, the panels may be reversed. Moreover, the panel may be located away from the fuselage and may or may not be exposed to the interior cabin of the plane. For example, the panel may be completely enclosed (e.g., within an interior door of a plane) or may be covered with carpet (e.g., as in a floor panel of a plane). It should be understood that the panel (e.g., the first panel) that is typically closest to the interior cabin 60 maybe covered by an aesthetic covering such as paint, wallpaper, a plastic fascia, cloth, leather, combinations thereof or the like and mary still define the interior cabin 60.

The panel structure 10 may be attached to the fuselage of the airplane according to a variety of techniques. Generally it is contemplated that the second or outer panel 14 may be connected directly or indirectly connected or attached to the fuselage and may be attached thereto with fasteners, adhesives, interference fits, support structures, combinations thereof or the like.

When the materials of the present invention are integrated into the support as shown and discussed in relation to Fig. 1, the materials can provide significant acoustical damping properties to the panels in addition to the other properties imparted to the panels. When, the materials are used on opposing sides of the support, as shown and discussed in relation to Figs. 4A and 4B, the materials can provide significant structural integrity to the panels in addition to the other properties imparted to the panels. As such, it should be understood that the material integrated into the support may be different or may be the same as the material used to adhere to the opposing sides. For example, where the materials are different, it is contemplated that the material integrated into the support may volumetrically expand at least 10%, more typically at least 30% and even more typically 100% more than the expansion of the material on the sides. As used herein, a material that expands to a volume that is 210 % of its original unexpanded volume volumetrically expands 10% more than a material that expands to 200% of its original volume, and similar calculations may be made for the other percentages. Generally, higher expanding materials can be more specifically tailored for acoustical dampening while the lower expanding material can be tailored for providing structural integrity.

As an addition or alternative to the previous embodiments, it is contemplated that that activated or activatable material, the support or a combination thereof may fill none, a portion, a substantial portion or substantially the entirety of a volume between two panels. The amount of the volume filled may depend upon considerations such desired strength, desired sound absorption or the like.

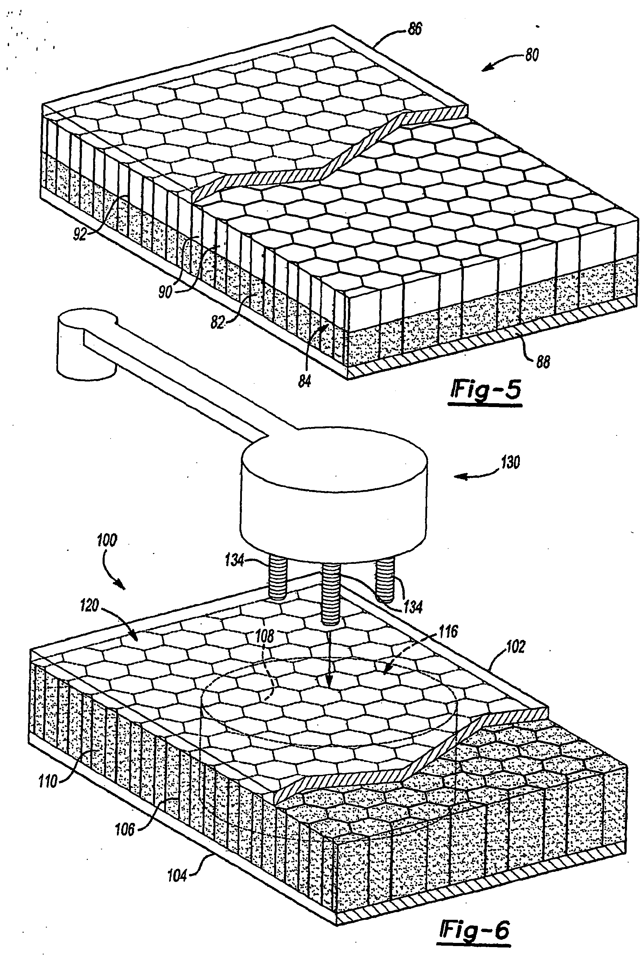

In Fig. 5, one embodiment of a panel structure 80 is illustrated as having an activated material 82 (e.g., a foam) that fills a portion of a volume 84 between a first panel 86 (e.g., a resistive face sheet) and a second panel 88. In the illustrated embodiment, the activated material 82 is located within openings 90 of a support 92. Typically, although not required, the material 82 (e.g., the foam and the voids or cells defined by the foam), the support 92 or both fill at least 5%, more typically at least 15% and even more typically at least 30 % of the volume between the panels. It is also typical, although not required, for the material 82, the support 92 or both to fill less than 90%, more typically less than 75% and even more typically less than 60% of the volume between the panels.

The particular embodiment illustrated can, if desired, exhibit a relatively high degree of sound absorption due to one or more factors such as the materials used for the panel structure, the configuration of the components of the panel structure or other factors. Generally, the panels 86, 88 may be formed of any of the materials discussed herein or other materials. According to one preferred embodiment, however, the first panel 86 is formed of a fabric (e.g., upholstery, felt material, wire mesh) or non-fabric material that includes or is formed substantially entirely of a polymer, fiberglass, natural fiber, metal (e.g., aluminum, steel, magnesium, a combination thereof or the like), metal fibers, combinations thereof or the like, which may be woven into a fabric, molded, extruded or other wise formed or processed. The first panel 86 if typically formed of a material that allows sound waves to pass through it and the material may additionally provide some amount of sound impedance. Generally, it is contemplated that the material of the first panel may or may not be impervious to fluids.

The second panel 88, like the first, may also be formed of any of the suitable materials discussed herein. As one example, the second panel 88, may include or be formed substantially entirely of an epoxy/glass fiber prepreg or composite. The support 92 can also be formed of any of the suitable materials discussed herein. In the illustrated embodiment, the support 92 is a honeycomb structure similar to that described for Fig. 1.

For forming the panel structure of Fig. 5, the activated material may be located within the opening of the honeycomb according to any of the techniques discussed herein. According to one embodiment, activatable material is located adjacent the second panel 88 and expanded or foamed (e.g., by exposure to heat as described herein) into the openings 90 of the support 92 to whatever distance or degree is desired. Preferably, after activation, the activated material 82 occupies a volume that is at least 150%, more typically at least 400% and even more typically at least 800% of the volume occupied by the activatable material prior to activation. Advantageously, such an expansion of the activatable material allows for the activated material 82 to efficiently fill at least part of the volume 84 between the panels 86, 88.

As another addition or alternative to the previous embodiment, it is contemplated that the panel structure of the present invention may include a relatively high strength material throughout or within a region of the panel structure. Advantageously, such a material or region can assist providing structural integrity to the panel structure, particularly at locations where components are attached to the panel structure.

Referring to Fig. 6, an exemplary panel structure 100 is illustrated as having a first panel 102 and a second panel 104. The panel structure 100 also includes support 106 and one or more activated materials 108, 110 between the first panel 102 and the second panel 104. It should be understood that any of the components of the panel structure 100 can be formed of any of the suitable materials discussed herein or others unless otherwise specified. Moreover, the components may be assembled or applied to each other using any of the suitable techniques discussed herein or others, unless otherwise specified.

As can be seen, the panel structure 100 of Fig. 6 includes a relatively high strength region 116 as defined by the dashed line. Although shown as cylindrical, the region 116 may shaped as desired depending upon its intended use. The high strength region 116 is defined by the fact that its activated material 108 has a relatively high strength. For example, the material 108 can have a compressive strength that is at least about 0.7 MPa (but may be less), more typically at least about 1.5 MPa and even more typically at least about 2.5 MPa. If needed, such compressive strength values can be measured according to automotive standard ASTM D-1621. In addition to compressive strength, the material 108 can have a compressive modulus of at least 100 MPa but may be less, more typically at least about 150 MPa and even more typically at least about 200 MPa. Preferably, the activated material 108 of Fig. 6 is a structural foam that has been activated according to techniques already described herein, however, the material 108 may also be selected from the other materials discussed herein or others, unless otherwise specified.

In Fig. 6, the high strength region 116 is surrounded by or adjacent a lower strength region 120, however, it should be understood that the entire panel structure 100 may be a high strength region. The lower strength region 120 is defined by the fact that its activated material 110 has a compressive strength that is less than that of the activated material 108 of the high strength region 116. For example, the compressive strength of the material of the lower strength region can be less than 90%, less that 80% or even less than 60% of the compressive strength of the higher strength region 116.

Generally, for activated materials, the material of the high strength region is formed from an activatable or expandable material having lower expansion percentages than an activatable or expandable material forming the material of the lower strength region. Such relative expansion levels have been discussed above and apply here. It is also contemplated that the lower strength material could be configured as shown and described in relation to Fig. 5. Advantageously, high strength regions such as the region 116 of Fig. 6 are particularly suitable for having one or more components attached thereto. In Fig. 6, a component 130 is illustrated just prior to attachment of the component 130 to the high strength region 116. The component 130 shown is a handle (e.g. a door handle), however it could be any number of different components such as mouldings, pictures, advertisements, mirrors, other components, combinations thereof or the like. Typically, the component will include one or more fasteners for attaching the component to the panel structure. In Fig. 6, the component 130 includes a plurality of fasteners 134 (e.g., screws, blind rivets, clips or the like) which may be directly or indirectly attached to (e.g., threadably fastened to, inserted into or the like) the high strength region 116 including one or any combination of the activated material 108, the panels 102, 104 and/or the support 106.

As another addition or alternative to the previous embodiments, it is contemplated that the panel structure of the present invention may include one or more relatively large openings (e.g., through-holes, cavities or the like) that are suitable for receipt of one or more components. For example, panel structures of the present invention may need to have opening suitable for receipt of components such as wiring, handles (e.g., closure panel handles); fasteners, trim, windows, signs, combinations thereof or other components.

Referring to Fig. 6, an exemplary panel structure 200 according to the present invention is illustrated as have at least one relatively large opening 202. As used herein, the term relatively large opening in intended to mean any opening having a volume located between one or more surfaces defining the opening wherein that volume is at least 2 cm³, more typically at least 4 cm³ and even more typically at least 6 cm³. In the illustrated embodiment illustrated, the opening 202 is a through-hole with an annular surface 204 defining the opening 202 as disc shaped volume between or surrounded by the annular surface 204. It is contemplated that the volume of the opening may be as large as needed. However, it is generally desirable that such volume does not exceed 50 cm², more typically does not exceed 30 cm² and even more typically does not exceed 15 cm².

As shown, the panel structure 200 is comprised of a first panel 210 and a second panel 212 and a composite 214 therebetween. The composite 214 includes a support 218 and a first material 220 (e.g., activated or activatable material such a foam or foamable) and optionally, a second material 222. It will be understood that the panel structure 200 and its components (i.e., the panels 210, 212, the support 218 and the materials 220, 222) may be formed of any of the suitable materials discussed herein and may be configured according to any of the other embodiments described herein unless otherwise specifed. It should also be understood that the components of the panel structure may be assembled according to any of the embodiments described herein unless otherwise specifed.

The illustrated panel structure 200 also includes a peripheral region 128 that extends adjacent to the opening 202. As used herein, a peripheral region of the panel structure is intended to mean a region of the panel structure that extends from adjacent the opening 202 (e.g., firming one or more surfaces defining the opening) into the actual panel structure. Typically, although not required, a peripheral region (e.g., the entirety of the peripheral region) extends from adjacent the opening and into the panel structure a distance of at least 1 cm, more typically at least 2 cm and even more typically at least 3 cm. While it is contemplated that the peripheral region may extend from the opening any distance into the panel structure, it may be desirable for the region to extend less than 30 cm, more typically less than 25 cm and even more typically less than 10 cm into the panel structure. Generally, the peripheral region may extend substantially continuously, intermittently or only adjacent a portion of the opening.

Typically; the material 220 of the peripheral region 228, which may be a foam or any of the other suitable materials discussed herein, has one or more relatively high strength characteristics. For example, the material can have a compressive strength that is at least about 0.7 MPa or lower, more typically at least about 1.5 MPa and even more typically at least about 2.5 MPa. Such values can be measured according to automotive standard ASTM D-1621. Additionally, the material can have a compressive modulus of at least 100 MPa or lower, more typically at least about 150 MPa and even more typically at least about 200 MPa. Advantageously, the material 220 of the peripheral region 228 can assist in providing structural integrity to the panel structure 200, particularly at locations where components may extend into and/or through the opening 202 of the structure 202.

While not required, it is contemplated that a secondary region 232 of the panel structure 200 will include the second material 222, which has a strength that is less than the strength of the first material 220. For example, the second material 222 may have a compressive strength that is less than 90 % more typically less than 70% and even more typically less than 50% of the compressive strength of the first material 220 as determined above.

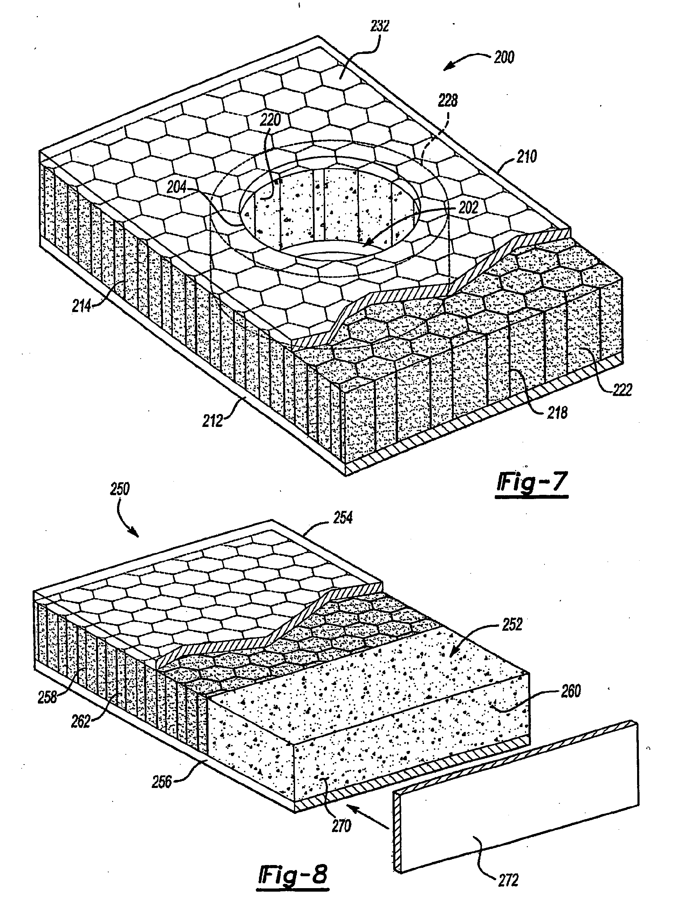

While the peripheral region of Fig. 7 has been discussed primarily in relation to relatively large openings, it is contemplated that such a peripheral region may be located at any ending region (e.g., a side, edge, border or the like) of the panel structure. For example, the peripheral region could be the outer border of a door or could be at the edge of a panel defining an archway or doorway or others. Thus, the peripheral region is typically adjacent to open space, although not necessarily required. It should additionally, be understood that a peripheral region can be a high relatively strength region and vice versa.

As yet another addition or alternative to the previous embodiments, it is contemplated that a peripheral region may be formed substantially entirely of activated material without a support. In Fig. 8, a panel structure 250 is illustrated with a peripheral or relatively high strength region 252.

The exemplary panel structure 250 is illustrated as having a first panel 254 and a second panel 256 and a support 258 and one or more activated materials 260, 262 between the first panel 254 and the second panel 256. It should be understood that any of the components of the panel structure 250 can be formed of any of the suitable materials discussed herein or others. Moreover, the components may be assembled, confingured or applied to each other using any of the suitable techniques discussed herein or others, unless otherwise specified.

The activated material 260 of the peripheral region 252 of the panel structure 250 extends substantially continuously between the panels 254, 256. The peripheral region 252 is like previously discussed peripheral regions in that the activated material 260 can have similar or same sizes, strengths and configurations as compared to the previously discussed peripheral regions. However, in the embodiment depicted, the peripheral region 252 is without a support or, stated another may, the support 258 of the panel structure 250 stops prior to entry and/or does not extend into the peripheral region 252.

The peripheral region 252 of Fig. 8 can be formed according to any of the techniques discussed herein or others. In one embodiment, an activatable material is located within the peripheral region 252 and activated to expand and/or foam such that the material adheres to the panels 254, 256 and forms the activated material 260 (e.g., structural foam) of the panel structure 250. The activatable material may be located in the peripheral region 252 between the panels 254, 256 using techniques such as manual or automatic placement of an insert formed of the activatable material into the region 252. Alternatively, the activatable material could be extruded or molded into the peripheral regions.

According to one embodiment, it is preferable for the activated material 260 to provide a relatively smooth edge or side surface 270 of the panel structure 250. Such a surface may be formed by machining (e.g., sanding) the activated material 260 after expansion to form the surface 270. Alternatively, such a surface may be formed by placing a barrier 272 adjacent the peripheral region such that the activatable material, during expansion, contacts and conforms to the barrier 272. Then, upon removal of the barrier 272; the surface 270 is relatively smooth. Of course, such surface 270 could include contours and still be considered relatively smooth. Preferably, the barrier 272 provides a non-stick surface such that the activated material 260 does not adhere to the barrier 272 with a high degree of strength during formation of the surface 270.

It should be understood that the panel structure 250 may or may not have a lower strength region 278 in the same manner as the panel structures 100, 200 of Figs. 6 and 7.

In one embodiment, a desirable process and/or material are provided for forming a peripheral region at one on more sides of a panel structure or substantially an entire periphery of a panel structure. Of course, the process may be employed with other materials and the material may be employed with other process including those processes and materials disclosed herein or others.

Generally, the process includes provision of one or more panels, a support and an activatable material. Preferably, although not required, the support is sandwiched between a first panel and a second panel such that a peripheral region is formed about part or all of the panel structure. As used herein, it is also contemplated that a peripheral region could be located at any edge or end of a panel structure, even internal edges such as the region 228 of Fig. 7. The peripheral region is typically at least partially defined by a gap between the first and second panel at one or more locations (e.g., sides) where the first and second panels extend beyond the support. The activatable material is located within the gap and then activated to expand (e.g., foam), cure and adhere to the support, the first panel, the second panel or any combination thereof. Thereafter, an operation (e.g., a machining and/or cutting operation) is performed upon the panel structure to provide a desirable outwardly facing surface at the peripheral region.

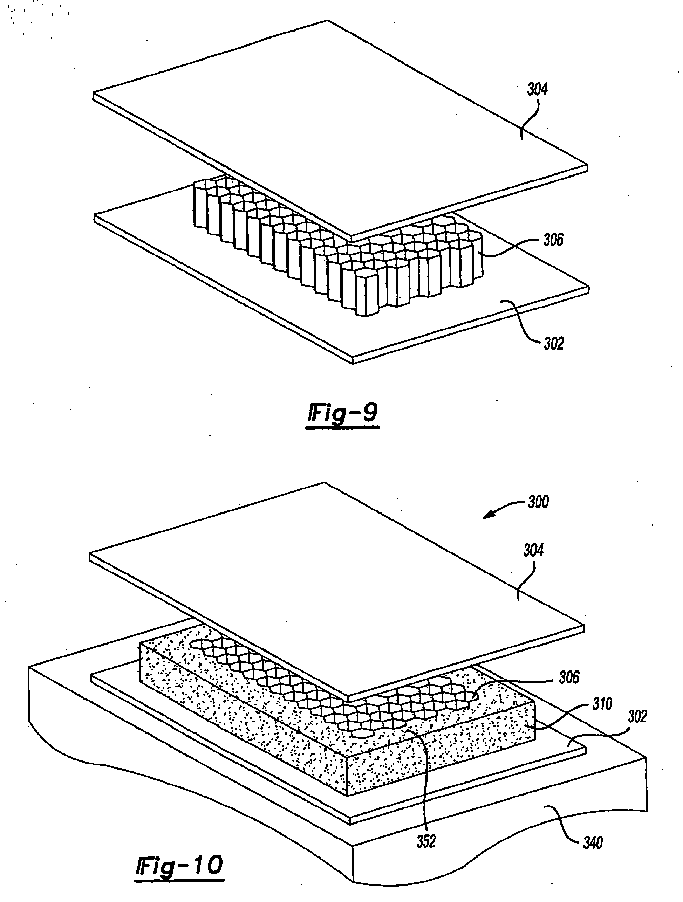

Figs. 9-13 illustrate one particularly desirable process of forming a panel structure 300. As can be seen, a first panel 302, a second panel 304 and a support 306 are provided in Fig. 9. The panels 302, 304 and the support 306 may be formed of any of the suitable materials discussed herein. In the particular embodiment illustrated, the panels 302, 304 are each formed of fiber and/or sheet material (e.g., woven or unwoven fiberglass sheets or rovings) impregnated in a matrix material, which preferably includes one or more epoxy resins or other epoxy materials. The illustrated support 306 is a honeycomb structure as previously described.

Assembly of the activatable material may be accomplished according to a variety of protocols. Generally, the first and second panels may be assembled to the support before, after, simultaneously or a combination thereof relative to assembly of the activatable material to the support.. For example, the panels may be located upon the sides of the support thereby forming a peripheral gap between the panels into which the activatable material may be placed adjacent an outer edge of the support. Alternatively, the activatable material may be applied (e.g., attached or adhered) to or placed adjacent to an outer edge of the support followed by location of the panels on sides of the support such that the activatable material is located in a gap between the panels. As another alternative, the first panel may be located on one side of the support and the activatable material may be applied (e.g., attached or adhere) or placed adjacent an outer edge of the support and/or the first of the panels followed by location of the second panel adjacent an opposite side of the support such that the activatable material is located at least partially in a gap between the panels. It is also contemplated that the activatable material may be applied to one or both of the panels followed by assembly of the support and/or the other panel.

In any of the aforementioned application protocols, the activatable material may be applied to the panels, the support or a combination thereof using a variety of techniques including extrusion and manual location of the activatable material. In one embodiment, the activatable material is emitted from an applicator (e.g., an extruder) to the desired location relative to the one or more panel and/or the support. In such an embodiment, the applicator may be moved relative to the one or more panels and/or the support, vice versa or a combination thereof. It may be desirable for the applicator to be substantially entirely automated, but may also include some manual components as well. Exemplary systems for these embodiments are disclosed in commonly owned U.S. Patent No. 5,358,397 and U.S. Patent Application serial no. 10/342,025, filed January 14, 2003, titled "Method and Apparatus for Applying Flowable Materials", both of which are incorporated herein by reference for all purposes.

When using an applicator such as the extruder, it can be desirable to elevate the temperature of the activatable material to assist the material in adhering to the one or more panels and/or the honeycomb (preferably without activating the material) upon application thereof. Upon cooling, the material may be tacky or may become substantially tack free to the touch. Alternatively the materials may be only slightly tacky so as to allow handling of the materials without any substantial portions of the material being removed due to the handling.

In another embodiment, an individual may manually apply the activatable material directly to the support and/or the one or more panels using instruments and/or the hands of the individual. Generally, one or more masses of the activatable material are manually applied according to one of the aforementioned protocols.

In one particular embodiment, one singular mass or multiple masses in the form of strips of activatable material are pressed against the honeycomb and/or the one or more panels such that strips attach to the components because of adhesive properties of the activatable material, deformation of the activatable material upon pressing or both. It is also contemplated that the strips of activatable material may be contoured (e.g., bent) about contours of the one or more panels and or the honeycomb (particularly the outer edge of the honeycomb) during pressing or manual application. In such an embodiment, it is typically desirable for the strip[s] of activatable material to be sufficiently flexible to allow bending of the strip[s] from a first straight or linear condition or shape to a second angled or arced condition or shape (e.g., such that one portion of the strip is at an angle a right angle) relative to another portion) without significant tearing or cracking of the strip (e.g., tearing or cracking that destroy the continuity of the strip or pull one part of the strip away from another part).

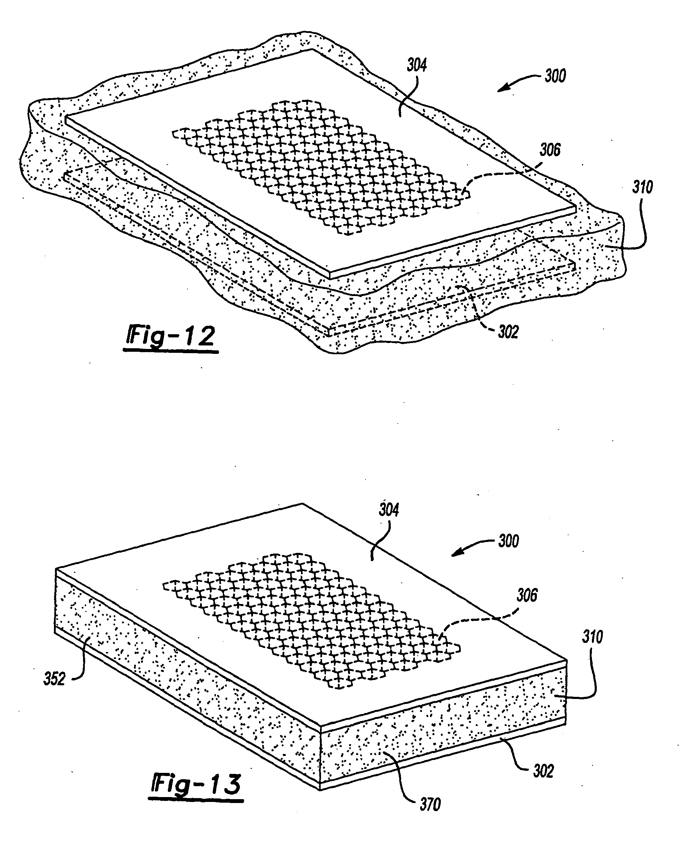

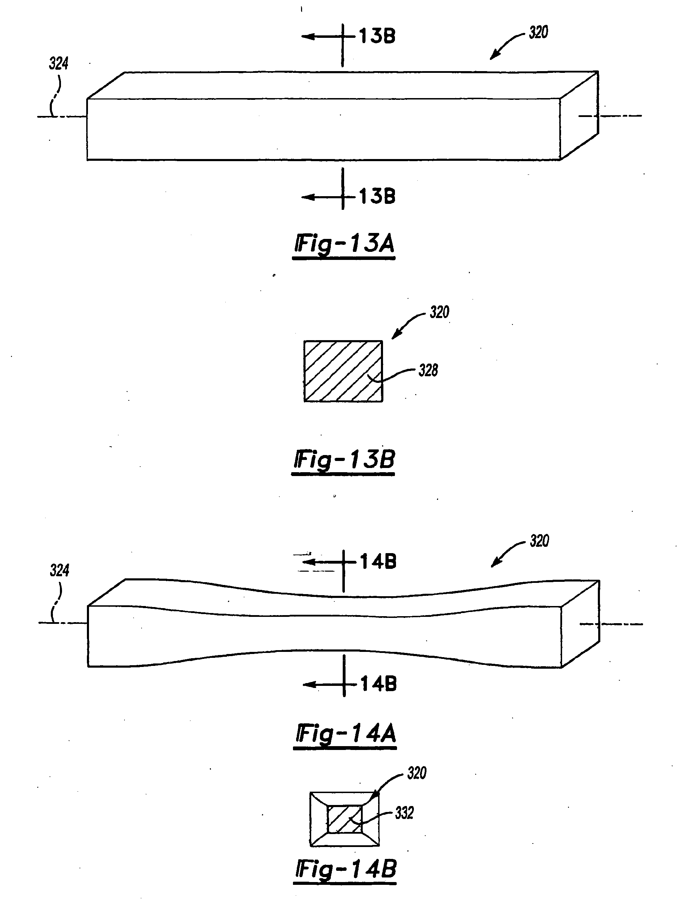

For allowing application of the activatable material according to the aforementioned protocols, particularly the manual applications, although the automated and applicator techniques may be used as well, it is typically desirable for the activatable material to exhibit certain desirable properties. As suggested, it is generally desirable for the activatable material, prior to activation, to be generally flexible or ductile. With reference to Figs. 13A-14B, it can be seen that a strip 320 of activatable material can typically be substantially stretched and or thinned prior to failure or rupture of the material. In the embodiment shown, there is a strip 320 of material having an axis 324 along its length. The strip 320 material has a first sectional area 328 perpendicular to the axis 324 prior to elongation of the strip 320 and a second sectional area 332 (e.g. generally square section) perpendicular to the axis 324 at the same location, but taken after elongation. Elongation is preferably equal in opposing directions along the axis 324. It is generally preferred, but not required, that the strip 320 of activatable material can have a second section area 332 that is less than 70%, more typically less than 50% and even more preferably less than 30% of the first sectional area 328 prior to failure or rupture (e.g., tearing apart) of the material upon stretching. It is also contemplated that the material will have an elongation characteristic permitting it to be deformed (i.e., elongated) at least about 10%, more preferably about 40%, even more preferably about 100% and still more preferably about 150% of its own length prior to failure (e.g., rupture).

Advantageously, the characteristics of the material may be such that the material can be quite easily shaped prior to activation. As such, the material can be more easily applied in a variety of locations. As one example, the material may be pressed and/or pushed into opening of the support (e.g., honeycomb) for, after activation, providing local reinforcement to the support or panel.

After activation of the expandable material, it is preferable, although not required, for the expanded material (e.g., foam) to have relatively high strength. Accordingly, the activated material will typically have a compressive modulus that is greater than about 100 MPa, more typically greater than about 300 MPa and even more typically greater than about 550 MPa (e.g., about 614 MPa) when testing is done in accordance with ASTM D-695. The activated material will also typically have a compressive strength of greater than about 700 psi, more typically greater than 1500 psi and even more particularly greater than 2000 psi when testing is done in accordance with ASTM D-695. Of course, lower moduli and strengths may be employed for the present invention, unless otherwise stated.

In addition to the above, it is contemplated that the panel structure of the present invention may be strategically located for reducing sound transmission into an aircraft. Often an airplane includes one or more openings (e.g., through-holes, interface locations or the like) which can provide sound and/or fluid communication between an internal portion of the airplanes and the external environment surrounding the airplane. Thus, it is contemplated that a panel structure of the present invention can be placed adjacent or overlaying such openings for promoting sound reduction (e.g., sound absorption, sound attenuation or both).

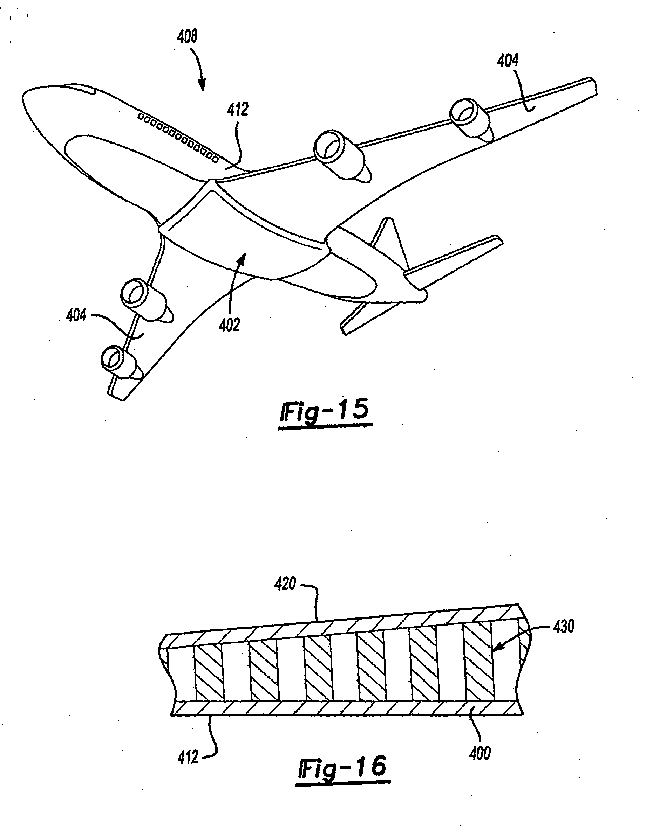

As an example, openings can be present in an aircraft which enhance sound communication between a storage compartment at the underside of an aircraft and the environment surrounding the aircraft and a panel structure may be placed adjacent or overlaying the openings. Referring to Figs. 15 and 16, an opening 400 (e.g., a cavity) can be located at or adjacent an interface 402 between the wings 404 of an airplane 408 and the fuselage 412 of the airplane 408. The particular opening 400 illustrated is between a floor board 420 of a storage compartment of the airplane 408 and the outer fuselage 412 of the airplane 408 adjacent the interface 402 between the wings 404 and the fuselage 412. As shown, a panel structure 430, which may be any of the panel structures discussed herein has been located in the opening 400 for providing sound reduction in that area. It is further contemplated that the opening 400 may be in sound and/or fluid communication with the environment surround the airplane 408 through one or more additional openings (not shown) such that the panel structure 430 can be adjacent or overlaying such openings.

Activatable materials having one or any combination of the aforementioned properties have been formulated and it has been found that admixtures having particular ingredients or features are particularly desirable.

Percentages herein refer to weight percent, unless otherwise indicated.

### Polymeric Materials

The activatable or expandable material typically includes one or more polymeric materials, which may include a variety of different polymers, such as thermoplastics, elastomers, plastomers combinations thereof or the like. For example, and without limitation, polymers that might be appropriately incorporated into the polymeric admixture include halogenated polymers, polycarbonates, polyketones, urethanes, polyesters, silanes, sulfones, allyls, olefins, styrenes, acrylates, methacrylates, epoxies, silicones, phenolics, rubbers, polyphenylene oxides, terphthalates, acetates (e.g., EVA), acrylates, methacrylates (e.g., ethylene methyl acrylate polymer) or mixtures thereof. Other potential polymeric materials may be or may include, without limitation, polyolefin (e.g., polyethylene, polypropylene) polystyrene, polyacrylate, poly(ethylene oxide), poly(ethyleneimine), polyester, polyurethane, polysiloxane, polyether, polyphosphazine, polyamide, polyimide, polyisobutylene, polyacrylonitrile, poly(vinyl chloride), poly(methyl methacrylate), poly(vinyl acetate), poly(vinylidene chloride), polytetrafluoroethylene, polyisoprene, polyacrylamide, polyacrylic acid, polymethacrylate.

The polymeric admixture can comprise up to 85% by weight or greater or the activatable material. Preferably, the polymeric admixture comprises about 0.1% to about 85%, more preferably about 1% to about 70% by weight of the activatable material.

### Epoxy Resin

Epoxy resin is used herein to mean any of the conventional dimeric, oligomeric or polymeric epoxy materials containing at least one epoxy functional group. The polymer-based materials may be epoxy containing materials having one or more oxirane rings polymerizable by a ring opening reaction. It is contemplated that the activatable material can include up to about 80 % of an epoxy resin or more. Typically, the activatabe material includes between about 5 % and 60% by weight epoxy resin and still more typically between about 10 % and 30 % by weight epoxy resin.

The epoxy may be aliphatic, cycloaliphatic, aromatic or the like. The epoxy may be supplied as a solid (e.g., as pellets, chunks, pieces or the like) or a liquid (e.g., an epoxy resin). The epoxy may include an ethylene copolymer or terpolymer that may possess an alpha-olefin. As a copolymer or terpolymer, the polymer is composed of two or three different monomers, i.e., small molecules with high chemical reactivity that are capable of linking up with similar molecules. Preferably, an epoxy resin is added to the activatable material to increase adhesion properties of the material. One exemplary epoxy resin may be a phenolic resin, which may be a novalac type or other type resin. Other preferred epoxy containing materials may include a bisphenol-A epichlorohydrin ether polymer, or a bisphenol-A epoxy resin which may be modified with butadiene or another polymeric additive.

### Elastomeric Material

Activatable materials of the present invention, particularly when used for sound reduction (e.g., sound attenuation and or sound absorption), insulation or both, will typically include a substantial amount of elastomeric or rubber material, which can be one elastomer or a mixture of several different elastomers. When used, the elastomeric material is typically at least about 5%, more typically at least about 14%, even more typically at least 25% by weight of the activatable material and the elastomeric material is typically less than about 65%, more typically less than about 45% and even more typically less than about 35% by weight of the activatable material.

Rubbers and elastomers suitable for the elastomeric material include, without limitation, natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene monomer rubbers), chlorosulphonated polyethylene, fluorinated hydrocarbons and the like. Particularly preferred elastomers are EPDMs sold under the tradename VISTALON 7800 and 2504, commercially available from Exxon Mobil Chemical. Another preferred elastomer is a polybutene isobutylene butylenes copolymer sold under the tradename H-1500, commercially available from BP Amoco Chemicals.

### Elastomer-containing Adduct

An elastomer-containing adduct can also be employed in the activatable material of the present invention such as an epoxy/elastomer adduct. The epoxy/elastomer hybrid or reaction product may be included in an amount of up to about 80 % by weight of the activatable material or more. More typically, the elastomer-containing adduct, when included, is approximately 20 to 80%, and more preferably is about 30 % to 70% by weight of the activatable material.

In turn, the adduct itself generally includes about 1:5 to 5:1 parts of epoxy to elastomer, and more preferably about 1:3 to 3:1 parts or epoxy to elastomer. The elastomer compound may be a thermosetting or other elastomer. Exemplary elastomers include, without limitation natural rubber, styrene-butadiene rubber, polyisoprene, polyisobutylene, polybutadiene, isoprene-butadiene copolymer, neoprene, nitrile rubber (e.g., a butyl nitrile, such as carboxy-terminated butyl nitrile), butyl rubber, polysulfide elastomer, acrylic elastomer, acrylonitrile elastomers, silicone rubber, polysiloxanes, polyester rubber, diisocyanate-linked condensation elastomer, EPDM (ethylene-propylene diene rubbers), chlorosulphonated polyethylene, fluorinated hydrocarbons and the like. In one embodiment, recycled tire rubber is employed.

The elastomer-containing adduct, when added to the activatable material, preferably is added to modify structural properties of the material such as strength, toughness, stiffness, flexural modulus, or the like. Additionally, the elastomer-containing adduct may be selected to render the activatable material more compatible with coatings such as water-borne paint or primer system or other conventional coatings.

### Blowing Agent

One or more blowing agents may be added to the activatable material. Such blowing agents can assist in forming cellular or foamed activated materials, which typically have a lower density and/or weight. In addition, the material expansion that can be caused by the blowing agents can help to improve sealing capability, substrate wetting ability, adhesion to a substrate, acoustic damping, combinations thereof or the like.

The blowing agent may be a physical blowing agent or a chemical blowing agent. For example, the blowing agent may be a thermoplastic encapsulated solvent that expands upon exposure to a condition such as heat. Alternatively, the blowing agent may chemically react to liberate gas upon exposure to a condition such as heat or humidity or upon exposure to another chemical reactant.

The blowing agent may include one or more nitrogen containing groups such as amides, amines and the like. Examples of suitable blowing agents include azodicarbonamide, dinitrosopentamethylenetetramine, 4,4ᵢ-oxy-bis-(benzenesulphonylhydrazide), trihydrazinotriazine and N, Nᵢ-dimethyl-N,Nᵢ-dinitrosoterephthalamide.

An accelerator for the blowing agents may also be provided in the activatable material. Various accelerators may be used to increase the rate at which the blowing agents form inert gasses. One preferred blowing agent accelerator is a metal salt, or is an oxide, e.g. a metal oxide, such as zinc oxide. Other preferred accelerators include modified and unmodified thiazoles or imidazoles, ureas or the like.

Amounts of blowing agents and blowing agent accelerators can vary widely within the activatable material depending upon the type of cellular structure desired, the desired amount of expansion of the expandable material, the desired rate of expansion and the like. Exemplary ranges for the amounts of blowing agents and blowing agent accelerators in the activatable material range from about 0.001 % by weight to about 5 % by weight.

In one embodiment, the present invention contemplates the omission of a blowing agent. Thus it is possible that the activatable material will not be an expandable material. Preferably, the formulation of the present invention is thermally activated. However, other agents may be employed for realizing activation by other means, such as moisture, radiation, or otherwise.

### Curing Agent

One or more curing agents and/or curing agent accelerators may be added to the activatable material. Amounts of curing agents and curing agent accelerators can, like the blowing agents, vary widely within the activatable material depending upon the type of cellular structure desired, the desired amount of expansion of the activatable material, the desired rate of expansion, the desired structural properties of the activatable material and the like. Exemplary ranges for the curing agents or curing agent accelerators present in the activatable material range from about 0.001 % by weight to about 7 % by weight.

Typically, the curing agents assist the activatable material in curing by crosslinking of the polymers, epoxy resins or both. It can also be desirable for the curing agents to assist in thermosetting the activatable material. Useful classes of curing agents are materials selected from aliphatic or aromatic amines or their respective adducts, amidoamines, polyamides, cycloaliphatic amines, (e.g., anhydrides, polycarboxylic polyesters, isocyanates, phenol-based resins (such as phenol or cresol novolak resins, copolymers such as those of phenol terpene, polyvinyl phenol, or bisphenol-A formaldehyde copolymers, bishydroxyphenyl alkanes or the like), sulfur or mixtures thereof. Particular preferred curing agents include modified and unmodified polyamines or polyamides such as triethylenetetramine, diethylenetriamine tetraethylenepentamine, cyanoguanidine, dicyandiamides and the like. An accelerator for the curing agents (e.g., a modified or unmodified urea such as methylene diphenyl bis urea, an imidazole or a combination thereof) may also be provided for preparing the activatable material. Other example of curing agent accelerators include, without limitation, metal carbamates (e.g., copper dimethyl dithio carbamate, zinc dibutyl dithio carbamate, combinations thereof or the like), disulfides (e.g., dibenzothiazole disulfide)

Though longer curing times are also possible, curing times of less than 5 minutes, and even less than 30 seconds are possible for the formulation of the present invention. Moreover, such curing times can depend upon whether additional energy (e.g., heat, light, radiation) is applied to the material or whether the material is cured at room temperature.

As suggested, faster curing agents and/or accelerators can be particularly desirable for shortening the time between onset of cure and substantially full cure (i.e., at least 90% of possible cure for the particular activatable material) and curing the activatable material while it maintains its self supporting characteristics. As used herein, onset of cure is used to mean at least 3% but no greater than 10% of substantially full cure. For the present invention, it is generally desirable for the time between onset of cure and substantially full cure to be less than about 30 minutes, more typically less than about 10 minutes and even more typically less than about 5 minutes and still more typically less than one minute. It should be noted that more closely correlating the time of softening of the polymeric materials, the time of curing and the time of bubble formation or blowing can assist in allowing for activation of the expandable material without substantial loss of its self supporting characteristics. Generally, it is contemplated that experimentation by the skilled artisan can produce desirable cure times using various of the curing agents and/or accelerators discussed above or others. It has been found that for a dicyanamide curing agent or other agents used for cure during activation, other curing agents or accelerators such as a modified polyamine (e.g., cycloaliphatic amine) sold under the tradename ANCAMINE 2441 or 2442 or 2014 AS; an imidazole (e.g., 4-Diamino-6[2'-methylimidazoyl-(1')ethyl-s-triazine isocyanuric) sold under the tradename CUREZOL 2MA-OK; an amine adduct sold under the tradename PN-23, an adipic hydrazide sold under the tradename ADH all commercially available from Air Products or an adduct of imidazole and isocyanate sold under the tradename LC-65 and commercially available from A & C Catalyst can produce particularly desirable cure times.

Also as suggested previously, the activatable material can be formulated to include a curing agent that at least partially cures the activatable material prior to activation of the material. Preferably, the partial cure alone or in combination with other characteristics or ingredients of the activatable material imparts sufficient self supporting characteristics to the activatable material such that, during activation and/ or foaming, the activatable material, expands volumetrically without significantly losing it shape or without significant flow in the direction or gravity.

In one embodiment, the activatable material includes a first curing agent and, optionally, a first curing agent accelerator and a second curing agent and, optionally, a second curing agent accelerator, all of which are preferably latent. The first curing agent and/or accelerator are typically designed to partially cure the activatable material during processing (e.g., processing, mixing, shaping or a combination thereof) of the activatable material for at least assisting in providing the activatable material with the desirable self supporting properties. The second curing agent and/or accelerator will then typically be latent such that they cure the activatable material upon exposure to a condition such as heat, moisture or the like.

As one preferred example of this embodiment, the second curing agent and/or accelerator are latent such that one or both of them cure the polymeric materials of the expandable material at a second or activation temperature or temperature range. However, the first curing agent and/or accelerator are also latent, but either or both of them partially cure the expandable material upon exposure to a first elevated temperature that is below the second or activation temperature.

The first temperature and partial cure will typically be experienced during material mixing, shaping or both. For example, the first temperature and partial cure can be experienced in an extruder that is mixing the ingredient of the activatable material and extruding the activatable material through a die into a particular shape. As another example, the first temperature and partial cure can be experienced in a molding machine (e.g., injection molding, blow molding compression molding) that is shaping and, optionally, mixing the ingredients of the expandable material.

The second or activation temperature and substantially full cure can then at a temperature experienced during processing of the article of manufacture to which the activatable material has been applied. For example, in the automotive industry, e-coat and paint ovens can provide activation temperatures. Typically, it is desirable for the activatable material to additionally expand (e.g., foam) as well as cure at the activation temperature as is described more in detail further below.

Partial cure can be accomplished by a variety of techniques. For example, the first curing agent and/or accelerator may be added to the expandable material in sub-stoichiometric amounts such that the polymeric material provides substantially more reaction sites than are actually reacted by the first curing agent and/or accelerator. Preferred sub-stoichiometric amounts of first curing agent and/or accelerator typically cause the reaction of no more than 60%, no more than 40% or no more than 30%, 25% or even 15% of the available reaction sites provided by the polymeric material. Alternatively, partial cure may be effected by providing a first curing agent and/or accelerator that is only reactive for a percentage of the polymeric material such as when multiple different polymeric materials are provided and the first curing agent and/or accelerator is only reactive with one or a subset of the polymeric materials. In such an embodiment, the first curing agent and/or accelerator is typically reactive with no more than 60%, no more than 40% or no more than 30%, 25% or even 15% by weight of the polymeric materials.

In another embodiment, the activatable material may be formed using a two component system that partially cures upon intermixing of the first component with the second component. In such an embodiment, a first component is typically provided with a first curing agent, a first curing agent accelerator or both and the second component is provided with one or more polymeric materials that are cured (e.g., cross-linked) by the curing agent and/or accelerator upon mixing of the first and second component. Such mixing will typically take place at a temperature below 80°C (e.g., around room temperature or from about 10°C to about 30 °C).

Like the previous embodiments, the partial cure, alone or in combination with other characteristics or ingredients of the activatable material, imparts sufficient self supporting characteristics to the activatable material such that, during activation and/ or foaming, the activatable material, doesn't experience substantial flow in the direction of gravity.

Also like the previous embodiments, partial cure, upon mixing may be effected by a variety of techniques. For example, the first curing agent and/or accelerator may, upon mixing of the first component and second component, be present within the activatable material in sub-stoichiometric amounts such that the polymeric material[s] provide substantially more reaction sites than are actually reacted by the first curing agent and/or accelerator. Preferred sub-stoichiometric amounts of first curing agent and/or accelerator typically cause the reaction of no more than 60%, no more than 40% or no more than 30%, 25% or even 15% of the available reaction sites provided by the polymeric material. Alternatively, partial cure may be effected by providing a first curing agent and/or accelerator that is only reactive for a percentage of the polymeric material such as when multiple different polymeric materials are provided and the first curing agent and/or accelerator is only reactive with one or a subset of the polymeric materials. In such an embodiment, the first curing agent and/or accelerator is typically capable of reaction with no more than 60%, no more than 40% or no more than 30%, 25% or even 15% by weight of the polymeric material.

The other ingredients (i.e., the additional polymeric materials, filler, other additives, the blowing agents and/or accelerators or the like) of the activatable material may be part of the first or second components of the two component system or may be added separately. Typically, the other additional ingredients will be split between the components in a manner that allows for reasonably thorough mixing of the first component with the second component. Generally, this will help the activatable material to be substantially homogeneous.

The activatable material formed by the two component system can be shaped according any of the techniques described herein (e.g., extrusion through a die, injection molding or the like). According to one preferred embodiment, however, the first and second components are both provided to and mixed within a die that has one or more cavities that shape the activatable material as it is mixed and/or partially cured.

Generally, it is contemplated that any of the curing agents and/or curing agent accelerators discussed herein or others may be used as the first and second curing agents for the activatable materials and the agents or accelerators used will typically depend upon the desired conditions of partial cure and the desired conditions of activation. However, it has been found that, for the first curing agent, hindered amines such as such as a modified polyamine (e.g., cycloaliphatic amine) sold under the tradename ANCAMINE 2337 or 2014 commercially available from Air Products, Inc. are particularly useful. Other desirable first curing agents are those that cure the polymeric materials at temperatures of mixing, formation and/or shaping (e.g., extrusion, molding or the like) of the activatable material. Thus, curing agents that typically cure the polymer materials at temperatures greater than 30 °C, but possibly less, more typically greater than 50 °C and even more typically greater than 70 °C and/or temperatures less than 150 °C, more typically less than 120 °C and even more typically less than 100 °C.

### Filler

The activatable material may also include one or more fillers, including but not limited to particulated materials (e.g., powder), beads, microspheres, or the like. Preferably, the filler includes a relatively low-density material that is generally non-reactive with the other components present in the activatable material.

Examples of fillers include silica, diatomaceous earth, glass, clay, talc, pigments, colorants, glass beads or bubbles, glass, carbon ceramic fibers, antioxidants, and the like. Such fillers, particularly clays, can assist the activatable material in leveling itself during flow of the material. The clays that may be used as fillers may include clays from the kaolinite, illite, chloritem, smecitite or sepiolite groups, which may be calcined. Examples of suitable fillers include, without limitation, talc, vermiculite, pyrophyllite, sauconite, saponite, nontronite, montmorillonite or mixtures thereof. The clays may also include minor amounts of other ingredients such as carbonates, feldspars, micas and quartz. The fillers may also include ammonium chlorides such as dimethyl ammonium chloride and dimethyl benzyl ammonium chloride. Titanium dioxide might also be employed.

In one preferred embodiment, one or more mineral or stone type fillers such as calcium carbonate, sodium carbonate or the like may be used as fillers. In another preferred embodiment, silicate minerals such as mica may be used as fillers. It has been found that, in addition to performing the normal functions of a filler, silicate minerals and mica in particular improved the impact resistance of the cured activatable material.

When employed, the fillers in the activatable material can range from 10 % to 90 % by weight of the activatable material. According to some embodiments, the activatable material may include from about 0.001 % to about 30 % by weight, and more preferably about 10 % to about 20 % by weight clays or similar fillers. Powdered (e.g. about 0.01 to about 50, and more preferably about 1 to 25 micron mean particle diameter) mineral type filler can comprise between about 5 % and 70 % by weight, more preferably about 10 % to about 20%, and still more preferably approximately 13 % by weight of the activatable material.

It is contemplated that one of the fillers or other components of the material may be thixotropic for assisting in controlling flow of the material as well as properties such as tensile, compressive or shear strength. Such thixotropic fillers can additionally provide self supporting characteristics to the activatable material. Examples of thixotropic fillers include, without limitation, silica, calcium carbonate, clays, aramid fiber or pulp or others. One preferred thixotropic filler is synthetic amorphous precipitated silicon dioxide.

### Fire Retardant

Typically, the activatable material will include one or more fire retardants, although not required. Useful flame retardants for the activatable material includes, halogenated polymers, other halogenated materials, materials (e.g., polymers) including phosphorous, bromine, chlorine, bromine, oxide, combinations thereof or the like. Exemplary flame retardants include, without limitation, chloroalkyl phosphate, dimethyl methylphosphonate, bromine-phosphorus compounds, ammonium polyphosphate, neopentylbromide polyether, brominated polyether, antimony oxide, calcium metaborate, chlorinated paraffin, brominated toluene, hexabromobenzene, antimony trioxide, graphite (e.g., expandable graphite), combinations thereof or the like.

When used, the fire retardant can be a fairly substantial weight percentage of the activatable material. The fire retardant[s] can comprise greater than 2%, more typically greater than 12%, even more typically greater than 25% and even possibly greater than 35% by weight of the activatable material.

### Other Additives

Other additives, agents or performance modifiers may also be included in the expandable material as desired, including but not limited to a UV resistant agent, a flame retardant, an impact modifier, a heat stabilizer, a UV photoinitiator, a colorant, a processing aid, a lubricant, a reinforcement (e.g., chopped or continuous glass, ceramic, aramid, or carbon fiber or the like).

Activatable materials of the present invention, particularly when used for sound reduction (e.g., sound attenuation and or sound absorption), insulation or both, will typically include adhesion promoter, which may be one or a mixture of multiple components. When used, the adhesion promoter is typically at least about 1%, more typically at least about 4%, even more typically at least 8% by weight of the activatable material and the elastomeric material is typically less than about 30%, more typically less than about 20% and even more typically less than about 15% by weight of the activatable material. Various adhesion promoters can be employed including, without limitation, epoxy materials, acrylates, hydrocarbon resins or the like. One particularly preferred adhesion promoter is a hydrocarbon resin sold under the tradename SUPER NEVTAC 99, commercially available from Neville Chemical Company. Another particularly preferred adhesion promoter is an aromatic hydrocarbon resin sold under the tradename HIKOTACK P-90S, commercially available from Kolon Chemical.

Activatable materials of the present invention, again particularly when used for sound reduction (e.g., sound attenuation and or sound absorption), insulation or both, will typically include processing oil, which may be one or a mixture of multiple oils. One particularly preferred processing oil is a refined petroleum oil sold under the tradename SENTRY 320, commercially available from Citgo oil. When used such oils can be present in the activatable material from about 1 % to about 25% by weight, but may be used in higher or lower quantities.

Figs. 10-12 illustrate one exemplary desirable protocol for application and activation of the activatable material according to the present invention. As can be seen if Fig. 10, the first panel 302 is positioned upon a first die 340 and the support 306 is positioned upon the first panel 302 such that the panel 302 is coextensive with a first side 350 of the support 306. A single or multiple strips 310 of activatable material have been manually pressed against an edge 352 (shown as an outer edged) of the support 306 by contouring the strip[s] 310 to correspond to any contours (e.g., corners) of the support 306 or edge 352.

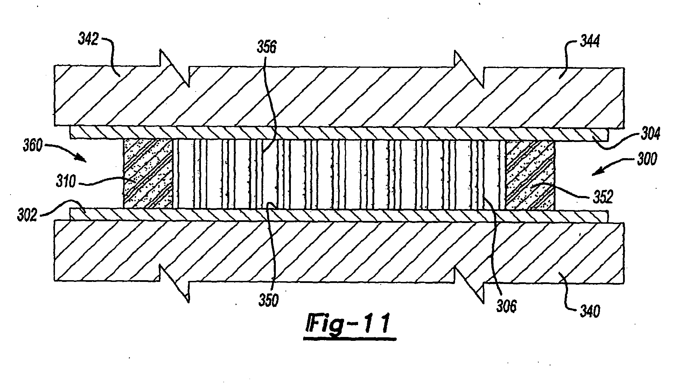

In Fig. 11, the second panel 304 has been placed over a second side 356 of the support 306 opposite the first side 350 such that the strip[s] 310 are located in a gap 360 between the panels 302, 304 adjacent the edge 352 of the support 306. As shown, the second panel 304 is coextensive with the second side 356 of the support 306.

Activation of the activatable material may be accomplished according to any of the techniques described herein. However, in Fig. 11, the panel structure 300 is located between the first member or die 340 and a second die 342 of a press. The first die 340 and second member or die 342 sandwich the panel structure 300 therebetween and expose the strip 310 of activatable material, the support 306 and the panels 302, 304 to an elevated temperature that is typically in the range of temperatures discussed herein. In turn, the activatable material is activated to expand (e.g., foam), cure (e.g., thermoset) and/or adhere to the first panel 302, the second panel 304, the support 306 or any combination thereof. It may also cause the matrix material of the panels 302, 304 to adhere to the support 306. Moreover, if it is desirable, the dies 340, 342 may be contoured so as to contour the overall panel structure 300.

After activation, the panel structure 300 is removed from one or both of the dies 340, 342 and will typically be in a configuration similar to that shown in Fig. 12. Thereafter, the panel structure 300 may be machined (e.g., cut) to produce a desirable (e.g., relatively smooth) outer surface 370 as shown in Fig. 13. Such machining may be done by die cutting, CNC milling, lathe treating, drilling, tapping, grinding, sanding or otherwise. Preferably, the outer surface is paintable, although not required.

As an alternative, barriers, such as those discussed in relation to Fig. 8, may be employed to control foaming and automatically produce a relatively flat surface upon removal of such barriers. Other methods may also be employed for producing the relatively smooth surface as well. Advantageously, such methods can produce a relatively smooth surface using only one or no machining operations, although not required.

While activation of any of the materials of the present invention may occur in a press as described above, activation may, as discussed, occur elsewhere and be brought about by various different stimuli. As one example, a large panel that is formed in a press may be cut into smaller panels and edge close-out material may be applied to those panels follow by the use of secondary heating to activate the material. As another example, a vacuum bagging process may be used in the application of the expandable and/or edge close-out material to a panel or other structure (e.g., aerospace structure) followed by exposing the vacuum bagged panel or structure to heat (e.g., in an autoclave) for activation.

### Exemplary Formulations

An exemplary formulation for an expandable or activatable material that can exhibit one or any combination of the aforementioned desirable properties and which has been found to be particularly useful for, amongst other uses, edge closeout is provided in Table A below:

**Table A**

| Description | Percent |
|---|---|
| Polymer of Epoxy Resin and Bisphenol A | 4.65% |
| Carboxy/Acrylonitrile/Butadiene polymer | 2.70% |
| 2-Propenoic acid, 2-methyl-, oxiranylmethyl ester, polymer with ethane and methyl 2-propenoate | 3.42% |
| redaction Product of Epichlorohydrin and Bisphenol A | 15.30% |
| Epoxy Phenol Novolac Resin | 6.72% |
| Methlene Diphenyl Bis (Dimethyl Urea) | 0.45% |
| Dicyandiamide (Cyanoguanidine) | 1.95% |
| Polymer Encapuslated Isopentane | 6.00% |
| Soda Lime Borosilicate Glass/Amorphous Silicate | 18.00% |
| Ammonium Polyphosphate | 40.00% |
| Synthetic Amorphous Precipitated Silocon Dioxide | 0.75% |
| Pigment | 0.10% |

It is contemplated that the weight percentages of the ingredients of Tables A may be raised or lowered by 5, 10, 20, 30, 40 or more percent to form ranges of those ingredients as are suitable for the particular ingredient. For example, an ingredient that is 10 weight percent may be raised or lowered by 20 percent to form a range of 8 to 12 percent. Of course, different compositions of activatable material may be employed within the scope of the present invention particularly if the compositions exhibit one or more of the desired properties. For improving shelf life of the material, it may be desirable to refrigerate the material at a temperature below about 5, 10 or 15 °C although not required unless otherwise stated.

Other exemplary formulations for an expandable or activatable material that can exhibit one or any combination of the aforementioned desirable properties and which has been found to be particularly useful for, amongst other uses, edge closeout is provided in Table B below:

**Table B**

| Description | Wt. Percent | Wt. Percent | Wt. Percent |
|---|---|---|---|
| Solid Epoxy Resin (bisphenol A) | 9.30.% | 10.00 | 10.00 |
| Carboxy/Acrylonitrile/Butadiene Rubber | 3.00% | 3.00 | 3.00 |
| Ethylene/Methacrylate/Glycidyl Methacrylate Terpolymer | 2.70% | 2.70 | 2.70 |
| Non-Carboxylated Butadiene Nitrile Rubber | 4.00% | 4.00 | 4.00 |
| liquid Epoxy Resin (bisphenol A) | 16.00% | 19.20 | 20.50 |
| Epoxy Phenol Novolac Resin | 12.00% | 11.80 | 11.80 |
| Methylene Diphenyl Bis (Dimethyl Urea) | 1.00% | 1.00 | 1.00 |
| Dicyandiamide (Cyanoguanidine) | 3.00% | 3.00 | 3.00 |
| Modified Cycloaliphatic Amine | 0.50% | 0.50 | 0.50 |
| Blowing Agent (solvent encapsulated in thermoplastic) | 2.75% | 6.00 | 8.00 |
| Glass Spheres (hollow) | 3.00 | 3.00 | |
| Ammonium Polyphosphate | 42.00% | 35.00 | 34.70 |
| Synthetic Amorphous Precipitated Silocon Dioxide | 0.75% | 0.75 | 0.75 |
| pigment | | 0.05 | 0.05 |

It is contemplated that the weight percentages of the ingredients of Table B may be raised or lowered by 5,10,20,30,40 or more percent to form ranges of those ingredients as are suitable for the particular ingredient. For example, an ingredient that is 10 weight percent may be raised or lowered by 20 percent to form a range of 8 to 12 percent. Of course, different compositions of activatable material may be employed within the scope of the present invention particularly if the compositions exhibit one or more of the desired properties. For improving shelf life of the material, it may be desirable to refrigerate the material at a temperature below about 5, 10 or 15 °C although not required unless otherwise stated.

An exemplary formulation for an activatable or expandable material that can exhibit one or any combination of the aforementioned desirable properties and which has been found to be particularly desirable for sound reduction (e.g., sound attenuation and/or absorption) and other functions is provided in Table C below:

**Table C**

| Description | Percent |
|---|---|
| EPDM rubber | 25.27% |
| EVA copolymer | 4.23% |
| Polyethylene | 3.76% |
| Hydrocarbon Resin | 2.50% |
| Cure Accelerator | 1.70% |
| Polybutene Isobutylene Butylene Copolymer | 4.71% |
| Blowing Agent Accelerator | 1.22% |
| Sulfur Curing Agent | 0.63% |
| Pigment | 0.31 % |
| Blowing Agent | 6.83% |
| Processing Oil | 10.24% |
| Aromatic Hydrocarbon Resin | 8.60% |
| Flame Retardant | 30% |

It is contemplated that the weight percentages of the ingredients of Table C may be raised or lowered by 5, 10, 20, 30, 40 or more percent to form ranges of those ingredients as are suitable for the particular ingredient. For example, an ingredient that is 10 weight percent may be raised or lowered by 20 percent to form a range of 8 to 12 percent. Of course, different compositions of activatable material may be employed within the scope of the present invention particularly if the compositions exhibit one or more of the desired properties.

Various activatable materials may be used for reinforcement as disclosed and discussed herein. One additional material, which can be employed for reinforcement and particularly local reinforcement is disclosed in commonly owned copending U.S. patent application attorney docket 1001-242P1, filed on November 1, 2005, titled Adhesive Material and Method of Using Same.

## Claims

1. An interior panel structure for an airplane, the structure comprising:
at least one panel;
activatable material adjacent the at least one panel for the purposes of providing edge close-out to the panel structure or for providing local reinforcement to the panel structure or both, the activatable material having the following characteristics and ingredients:
i) a level of ductility prior to activation of the material that allows the material to be stretched such that a second cross-sectional area of the material can become less than half of a first original cross-sectional area of the material at the same location prior to rupture of the material; and
ii) a blowing agent and a curing agent
wherein the panel structure is configured to be located within the airplane.

2. A structure as in claim 1 wherein the at least one panel includes a first panel and a second panel and the activatable material is located at least partially between the first panel and second panel.

3. A structure as in claims 2 wherein the first panel generally opposes the second panel and a support is located substantially entirely between the first panel and the second panel and a strip of activatable material is located within a gap between the first and second panels and, after activation, is adjacent an edge of the support and wherein the activatable material activates, upon exposure to heat, to foam and adheres to the first panel, the second panel and the support.

4. A structure as in claim 3 wherein the support is a honeycomb structure.

5. A structure as in any of claims 1-4 wherein the panel structure is configured for location within the fuselage of the airplane after activation of the activatable material and smoothing of the edges of the panel structure.

6. A structure as in any of claims 1-5 wherein the activatable material includes an epoxy resin, a thixotropic filler.

7. A structure as in any of claims 1-6 wherein the activatable material is activatable to soften, expand and cure upon exposure to heat.

8. A structure as in any of claims 1-7 wherein the material is a thermosettable and includes a Carboxyl/Acrylonitrile/Butadiene Rubber.

9. A structure as in any of claims 1-8 wherein the activatable material is at least partially cured prior to activation of the material.

10. A structure as in any of claims 1-9 wherein the activatable material includes a fire retardant.

11. A structure as in any of claims 1-10 wherein the fire retardant include ammonium polyphosphate.

12. A structure as in any of claims 1-11 wherein the activatable material is only slightly tacky or substantially non-tacky to the touch prior to activation.

13. A structure as in any of claims 1-12 wherein the activatable material includes epoxy resin and the epoxy resin includes a liquid epoxy resin and a solid epoxy resin.

## Patentansprüche

1. Innere Plattenstruktur für ein Flugzeug, wobei die Struktur umfasst:
mindestens eine Platte;
aktivierbares Material, das an der mindestens einen Platte angrenzt, zu dem Zweck der Plattenstruktur einen Kantenabschluss zur Verfügung zu stellen, oder der Plattenstruktur eine lokale Verstärkung zur Verfügung zu stellen, oder beides, wobei das aktivierbare Material über die folgenden Merkmale und Bestandteile verfügt:
i) eine gewisse Dehnbarkeit vor einer Aktivierung des Materials, die gewährleistet, dass das Material ausgedehnt werden kann, so dass ein zweiter Querschnitt des Materials weniger als halb so groß wie ein erster ursprünglicher Querschnitt des Materials an dem selben Ort werden kann, bevor das Material zerreißt; und
ii) ein Treibmittel und ein Vernetzungsmittel; wobei die Plattenstruktur konfiguriert ist, um in dem Flugzeug angeordnet zu werden.

2. Struktur gemäß Anspruch 1, wobei die mindestens eine Platte eine erste Platte und eine zweite Platte umfasst und das aktivierbare Material mindestens teilweise zwischen der ersten Platte und der zweiten Platte angeordnet ist.

3. Struktur gemäß Anspruch 2, wobei die erste Platte im Allgemeinen gegenüber der zweiten Platte angeordnet ist und eine Unterstützung im Wesentlichen vollständig zwischen der ersten Platte und der zweiten Platte angeordnet ist und ein Streifen eines aktivierbaren Materials in einem Spalt zwischen der ersten und der zweiten Platte angeordnet ist und nach einer Aktivierung an einer Kante der Unterstützung angrenzend angeordnet ist und wobei das aktivierbare Material nach einer Zuführung von Wärme zu schäumen beginnt und sich mit der ersten Platte, der zweiten Platte und der Unterstützung verklebt.

4. Struktur gemäß Anspruch 3, wobei die Unterstützung eine Wabenstruktur ist.

5. Struktur gemäß einem der Ansprüche 1-4, wobei die Plattenstruktur zur Lokalisierung in dem Rumpf des Flugzeuges nach einer Aktivierung des aktivierbaren Materials und einer Glättung der Kanten der Plattenstruktur konfiguriert ist.

6. Struktur gemäß einem der Ansprüche 1-5, wobei das aktivierbare Material ein Epoxydharz und einen thixotropen Füllstoff umfasst.

7. Struktur gemäß einem der Ansprüche 1-6, wobei das aktivierbare Material aktivierbar ist, um nach Zuführung von Wärme zu enthärten, sich auszudehnen und auszuhärten.

8. Struktur gemäß einem der Ansprüche 1-7, wobei das Material ein in Wärme aushärtendes Material und ein Carboxyl/Acrylnitril/Butadien-Gummi ist.

9. Struktur gemäß einem der Ansprüche 1-8, wobei das aktivierbare Material mindestens teilweise vor einer Aktivierung des Materials ausgehärtet wird.

10. Struktur gemäß einem der Ansprüche 1-9, wobei das aktivierbare Material ein feuerhemmendes Material umfasst.

11. Struktur gemäß einem der Ansprüche 1-10, wobei das feuerhemmende Material Ammoniumpolyphosphat umfasst.

12. Struktur gemäß einem der Ansprüche 1-11, wobei das aktivierbare Material vor einer Aktivierung bei einer Berührung nur leicht klebrig oder im Wesentlichen nicht klebrig ist.

13. Struktur gemäß einem der Ansprüche 1-12, wobei das aktivierbare Material ein Epoxydharz umfasst und das Epoxydharz ein flüssiges Epoxydharz und ein festes Epoxydharz umfasst.

## Revendications

1. Structure de panneau intérieur pour avion, la structure comprenant :
au moins un panneau ;
un matériau activable adjacent à l'au moins un panneau afin d'assurer une finition de bordure de la structure du panneau ou d'assurer un renforcement local de la structure de panneau ou les deux, le matériau activable ayant les caractéristiques et ingrédients suivantes :
i) un niveau de ductilité avant activation du matériau qui permet au matériau d'être étiré de telle sorte qu'une seconde aire de section du matériau puisse devenir inférieure à la moitié d'une première aire de section originale du matériau au même emplacement avant rupture du matériau ; et
ii) un agent d'expansion et un agent de durcissement ;
la structure de panneau étant configurée pour se trouver à l'intérieur de l'avion.

2. Structure selon la revendication 1, dans laquelle l'au moins un panneau comprend un premier panneau et un second panneau et le matériau activable se trouve au moins partiellement entre le premier panneau et le second panneau.

3. Structure selon la revendication 2, dans laquelle le premier panneau est généralement opposé au second panneau et un support se trouve sensiblement entièrement entre le premier panneau et le second panneau et une bande de matériau activable se trouve à l'intérieur d'un espace entre les premier et second panneaux et, après activation, est adjacente à un bord du support, et dans laquelle le matériau activable s'active, lors d'une exposition à la chaleur, pour mousser et adhérer au premier panneau, au second panneau et au support.

4. Structure selon la revendication 3, dans laquelle le support est une structure en nid d'abeille.

5. Structure selon l'une quelconque des revendications 1 à 4, dans laquelle la structure de panneau est configurée pour se trouver à l'intérieur du fuselage de l'avion après activation du matériau activable et lissage des bords de la structure de panneau.

6. Structure selon l'une quelconque des revendications 1 à 5, dans laquelle le matériau activable comprend une résine époxy, une charge thixotropique.

7. Structure selon l'une quelconque des revendications 1 à 6, dans laquelle le matériau activable est activable pour se ramollir, se dilater et durcir lors d'une exposition à la chaleur.

8. Structure selon l'une quelconque des revendications 1 à 7, dans laquelle le matériau est thermodurcissable et comprend un caoutchouc Carboxyl/Acrylonitrile/Butadiène.

9. Structure selon l'une quelconque des revendications 1 à 8, dans laquelle le matériau activable est au moins partiellement durci avant activation du matériau.

10. Structure selon l'une quelconque des revendications 1 à 9, dans laquelle le matériau activable comprend un agent ignifugeant.

11. Structure selon l'une quelconque des revendications 1 à 10, dans laquelle l'agent ignifugeant comprend du polyphosphate d'ammonium.

12. Structure selon l'une quelconque des revendications 1 à 11, dans laquelle le matériau activable est uniquement légèrement collant ou sensiblement non collant au toucher avant activation.

13. Structure selon l'une quelconque des revendications 1 à 12, dans laquelle le matériau activable comprend une résine époxy et la résine époxy comprend une résine époxy liquide et une résine époxy solide.
